# EUROPÄISCHE PATENTANMELDUNG

(11) **EP 1 512 360 A1**
(43) Veröffentlichungstag der Anmeldung: **09.03.2005**
(21) Anmeldenummer: 03019893.1
(22) Anmeldetag: 02.09.2003
(51) Int. Cl.: A47K 11/02

(54) **Trockencontainertoilette**

(71) Anmelder: Tiedtke, Hans-Uwe, 82467 Garmisch-Partenkirchen (DE)
(72) Erfinder: Tiedtke, Hans-Uwe, 82467 Garmisch-Partenkirchen (DE)

(57) **Zusammenfassung**

Dreiteilige Containertoilette auf Rädern für den Einsatz in Räumen, die aus Kunstoffformteilen hergestellt ist, welche lösbar miteinander verbunden sind und mit beweglichen Beschlägen, z.B. Clips zusammengehalten werden. Die drei Toilettenteile (1,2,3) können zerlegt, ineinander geschichtet werden und ergeben somit ein geringes Packmaß, so dass durch ihr geringes Gewicht, die Containertoilette im verpackten Zustand von einer Person tragbar ist. Die Containertoilette ist mit einer Abluftöffnung versehen.

## Beschreibung

Die Erfindung betrifft einen Trockentoilettencontainer für den Einsatz in Gebäuden oder Behelfsbauten bei großen Menschenansammlungen z. B. bei Großveranstaltungen, in Flüchtlingslagern und Katastrophengebieten, die von Katastrophenhilfsorganisationen organisiert werden und für den Einsatz in Wohngegenden, in denen es keine Haustoiletten gibt, was in vielen Entwicklungsländern in ländlichen Gebieten der Fall ist.

Bekannte Toilettencontainer haben ein sehr großes Transportvolumen, sind sehr schwer. Sie werden überwiegend bei Großveranstaltungen und auf Baustellen verwendet und müssen durch Absaugeinrichtungen entleert werden. Diese Absaugeinrichtungen sind an vielen Orten z. B. in Entwicklungsländern und bei fehlender Infrastruktur nicht verfügbar.

Der hier beschriebene erfindungsgemäße Toilettencontainer soll bevorzugt in Verbindung mit speziell hierfür hergestellten Elementhäusern aufgestellt werden und er ist so konstruiert, dass das Oberteil in den Mittelteil passt und dieses wiederum in das Unterteil und somit ein kleines Transportvolumen entsteht. Diese Container aus Kunststoff im Rotationsverfahren hergestellt weisen ein geringes Gewicht auf. Die Vorderfront des Mittelteils ist stufenförmig ausgebildet und erreicht mit dem aufgesetzten Oberteil eine bequeme Sitzhöhe. Mittel- und Oberteil werden durch Clips miteinander weitgehend geruchsdicht zusammengefügt. Auf dem Oberteil wird die Toilettensitzöffnung durch einen Deckel abgedeckt. Zum bequemen Erreichen der Stufe des Mittelteils wird eine Aufstiegshilfe in Form einer Stufe vor diesen Container gestellt. Der Container wird auf vier Rädern bewegt, die an den vier Ecken angebracht sind. Zwei Räder sind lenkbar und mit einer Feststellvorrichtung versehen. So kann der Container zur Entleerung über eine Zugvorrichtung, z.B. Deichsel oder Seil, leicht transportiert werden.

Der Containerinnenraum wird über eine im Oberteil angeformte Abluftöffnung über ein Abluftrohr entlüftet. Durch Schaffung eines leichten Luftunterdruckes im Containerinneren wird Raumluft angesaugt, so dass der Toilettenraum weitgehend von Fäkaliengerüchen verschont wird. Alle Toilettencontainer werden an eine Abluftringleitung angeschlossen und gemeinschaftlich vorwiegend mit einem Ventilator entlüftet.

Nachstehend wird eine Ausführungsform eines erfindungsgemäßen Trockentoilettencontainers anhand der beiliegenden Zeichnungen näher erläutert. Es zeigen:
**Fig.1** zeigt einen schematischen waagerechten Schnitt in Höhe A - A der Fig. 2 des erfindungsgemäßen Container-Unterteiles mit den Seitenwänden 1, der Containerboden 2 ist mehrfach durch Bodenaussteifung 3 stabilisiert, die Räder 8 auf der festen Radachse 9 ragen teilweise in die Radkästen 5, die um eine Achse um 360° schwenkbaren Räder 7 sind in den vorderen Randkästen 6 befestigt. Arretierungsaugen 10 für Deichsel oder andere Zughilfen sind sowohl vorne als auch an der hinteren Seite in Bodenhöhe angeordnet,

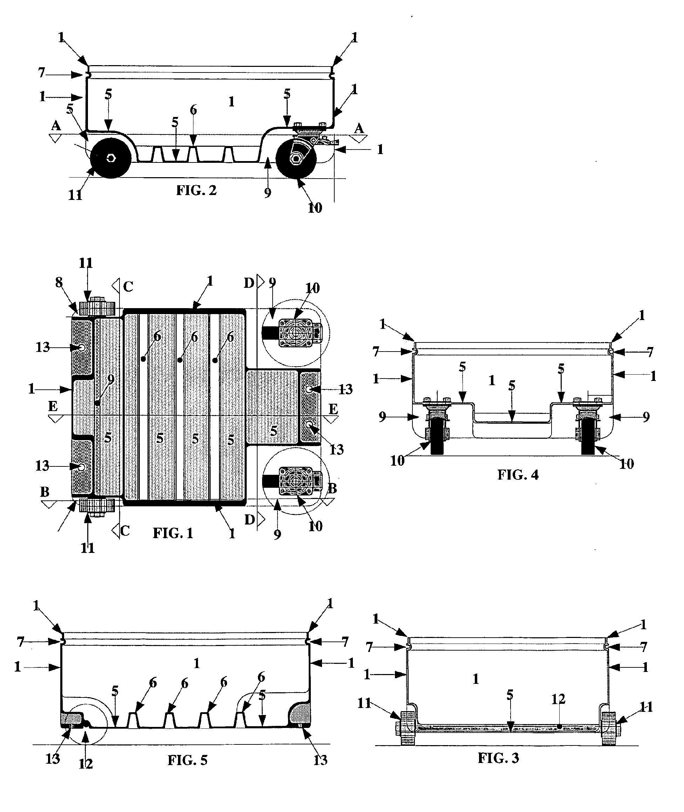

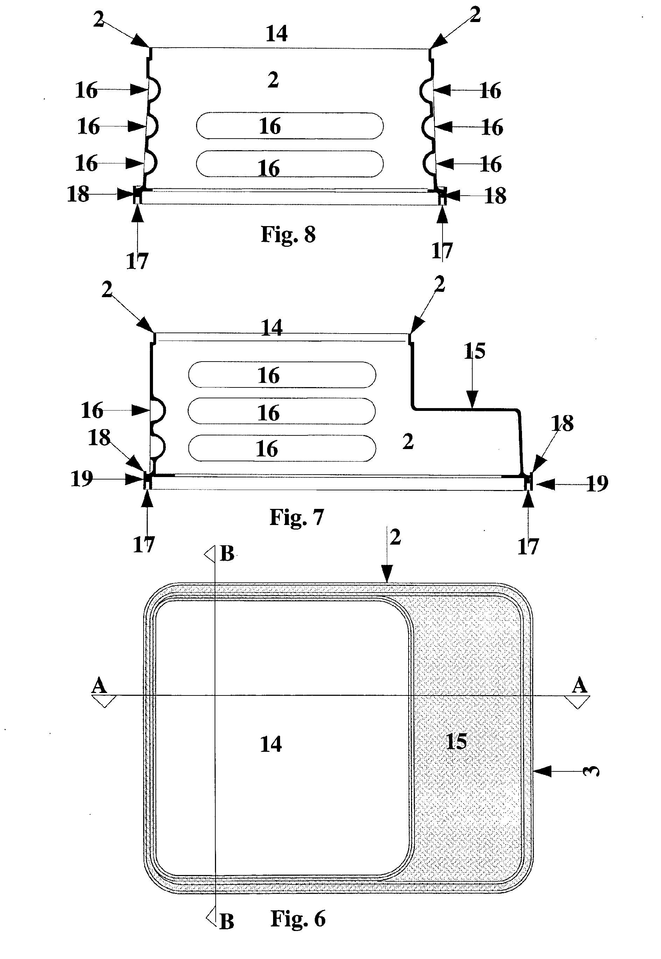

**Fig. 2** zeigt einen schematischen, senkrechten Schnitt in Fig. 1 B - B des Container-Unterteils mit den Seitenwänden 1, dem Containerboden 2 mit den Bodenaussteifungen 3. Die senkrechten Wände erhalten eine umlaufende Wandaussteifung 4, der obere senkrechte Teil über der Aussteifung verbindet über die in der Nut 14 Fig.8 eingelassene Schaumisolierung das Unterteil mit dem Mittelteil, die Räder 8 auf der festen Radachse 9 ragen teilweise in die Radkästen 5, die um 360° beweglichen Räder 7 sind in den vorderen Randkästen 6 befestigt und erlauben ein Drehen des Containers auf kleinster Fläche,
**Fig. 3** zeigt einen schematischen, senkrechten Schnitt in Fig. 1 C - C des Container-Unterteils mit den Seitenwänden 1, dem Containerboden 2, der Wandaussteifung 4, die Anordnung der auf der feststehenden Achse sitzenden Räder 8 im Radkasten 9,
**Fig.4** ist ein schematischer senkrechter Schnitt in Fig. 1 D - D des Container-Unterteils mit den Seitenwänden 1, dem Containerboden 2, der Wandaussteifung 4, dem Radkasten 6 und die darin befindlichen um 360° schwenkbaren Räder 7,
**Fig. 5** ein schematischer senkrechter Schnitt in Fig. 1 E - E des Container-Unterteils mit den Seitenwänden 1, dem Containerboden 2 mit den Bodenaussteifungen 3, die Wandaussteifung 4, die Anordnung der feststehende Radachse 9, Arretierungsaugen für Deichsel oder andere Zugvorrichtungen,

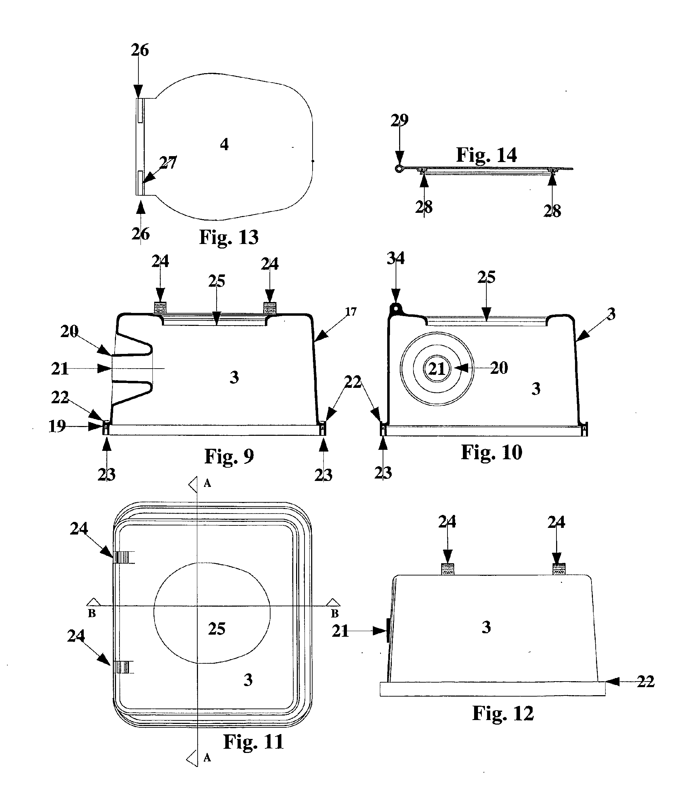

**Fig. 6** Draufsicht auf den Container-Mittelteil mit der Öffnung 11 für das Oberteil Fig. 9 und Stufenabsatz 12. Die äußeren Maße dieses Mittelteils sind so bemessen, dass der auf den Kopf gestellte Mittelteil optimal in den Hohlraum des Unterteils eingefügt werden kann und somit ein geringes Packmaß erreicht wird,
**Fig. 7** ein senkrechter Schnitt nach Fig. 6 A-A des Container-Mittelteils, Öffnung zur Aufnahme des Oberteils Fig. 9, Stufenabsatz 12, Wandaussteifungen 13, Nut 14 zur Aufnahme des Unterteils Fig.1, Aufkantung 15 für die Arretierung der Clips des Unterteils, Abdichtungsstreifen 16,
**Fig.8** ein senkrechter Schnitt nach Fig. 6 B-B des Container-Mittelteils, Öffnung zur Aufnahme des Oberteils Fig. 9, Wandaussteifungen 13, Nut 14 mit Dichtungsstreifen 16 zur Aufnahme des Unterteils Fig.1, Aufkantung 15 für die Arretierung der Klipps des Unterteils,
**Fig.9** ein senkrechter Schnitt der Fig. 11 A-A des Container-Oberteils mit Wand 17, mit angeformtem Deckelbeschlag 23, an einer Seite ist der Abluftstutzen 18 versenkt angeformt zur Aufnahme eines Abluftrohres, Abluftöffnung 19, Aufkantung 20 für die Arretierung der Klipps des Mittelteils, Nut 21 für die Aufnahme der Dichtung 22 und die Sitzöffnung 24,
**Fig.10** ein senkrechter Schnitt der 11 B-B des Container-Oberteils mit Wand 17, mit angeformtem Gleitlager 23 zur Aufnahme des Deckels, mit der Lage des Abluftstutzend 18 und der Abluftöffnung 19, Aufkantung 20 für die Arretierung der Klipps des Mittelteils, Nut 21 für die Aufnahme der Dichtung 22 und die Sitzöffnung 24,

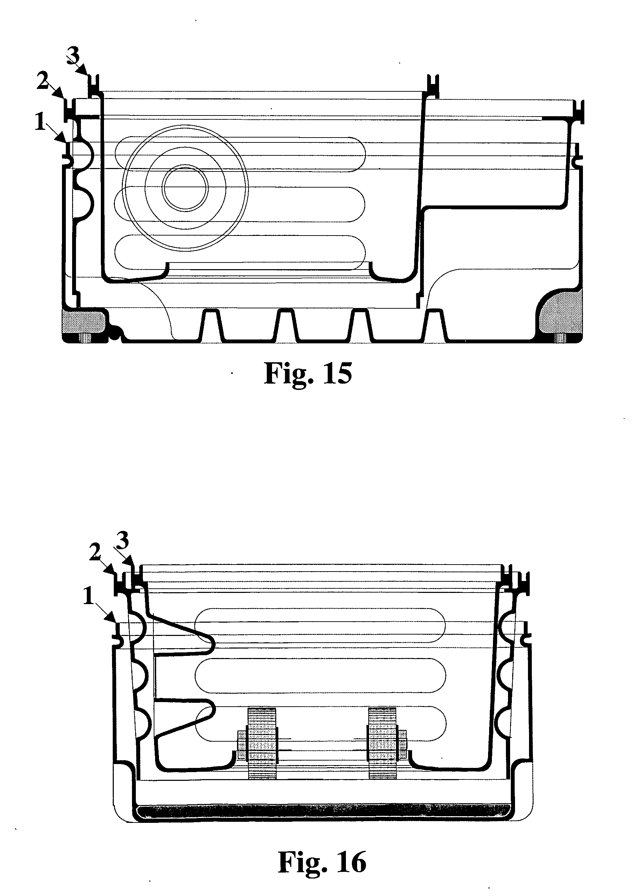

**Fig.11** Grundriss des Container-Oberteils mit Lage des Gleitlagers 23 für den Deckel Fig. 13 und Fig.14 und der Sitzöffnung. Die äußeren Maße dieses Oberteils sind so bemessen, dass das auf den Kopf gestellte Oberteil optimal in den Hohlraum des Mittelteils eingefügt werden kann und ein geringes Packmaß erreicht wird,
**Fig. 12** Frontansicht des Container-Oberteils mit Lage der Gleitlager zur Aufnahme des Deckelbeschlages, der Aufkantung für die Arretierung der Halteklipps und die Lage des Abluftstutzens 18,
**Fig.13** Toilettendeckel zur Abdeckung der Öffnung 24 als Geruchverschluss, mit angeformtem Rohrbeschlag 25 für eine Achsbefestigung in die Gleitlage 23,
**Fig. 14** Längsschnitt durch den Deckel Fig.13 mit Beschlaghalterung 25 und elastischem Dichtungsprofil 26 als Geruchsverschluss an der Unterseite dem Öffnungsverlauf 24 angepasst,
**Fig. 15** aus der Längsschnittdarstellung ersieht man, wie in das aufrechtstehende Unterteil 1, das Mittelteil.6 und das Oberteil 17 eingepasst sind. Die Räder mit Achse sind vor dem Gebrauch an den dafür vorgesehenen Stellen zu befestigen.
**Fig.16** zeigt die Querschnittdarstellung aus der man das Ineinandergreifen des Oberteils 17 in das Mittelteil 6 und dieses in das Unterteil 1 ersieht. Zubehör wie Achse und Räder finden in der Mitte des Containers Platz.

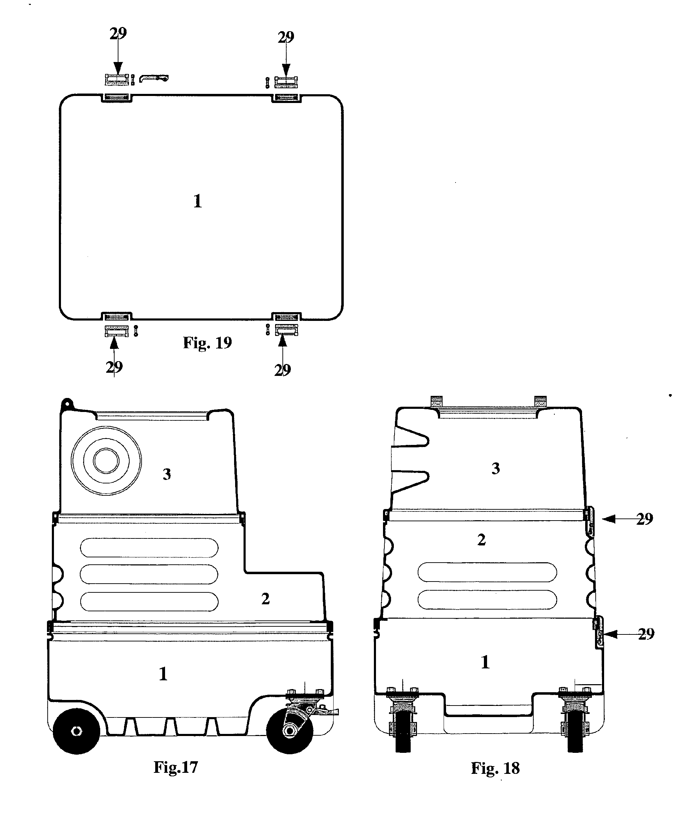

**Fig.17** zeigt im Längsschnitt die drei zusammengefügten Containerteile: Unterteil 1, Mittelteil 6 und das Oberteil 17,
**Fig.18** zeigt im Längsschnitt die drei zusammengefügten Containerteile: Unterteil 1, Mittelteil 6, Oberteil 17. Auf der rechten Seite ist die Platzierung des Schnappverschlusses 27dargestellt,
**Fig.19** der horizontale Schnitt des Unterteils 1 zeigt die Platzierung der Schnappverschlüsse, die eine feste Verbindung zum Mittelteil 6 ermöglicht,

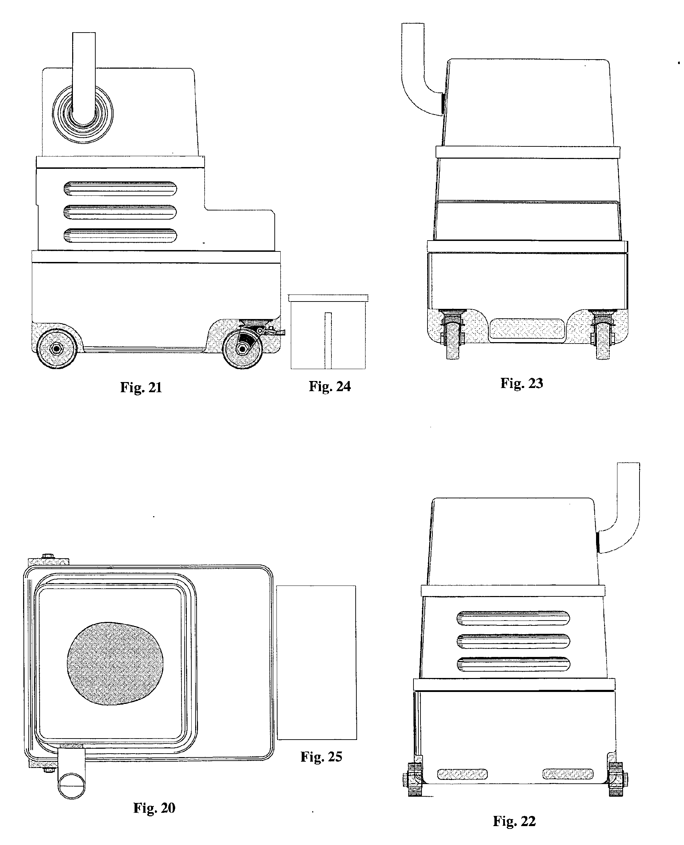

**Fig.20** in der Ansicht von oben ist die Lage der Toilettenöffnung und die Abluft im Oberteil und die Stufenanordnung des Mittelteils dargestellt. Die Stufe des Mittelteils wird über eine Aufstiegshilfe z. B. eine Holzstufe betreten,
**Fig.21** die Seitenansicht der montierten Elemente zeigen das aus dem Oberteil herauskommende Abluftrohr, die Stufe im Mittelteil, die Anordnung der Räder im Unterteil und die vor dem Unterteil platzierte Aufstiegshilfe,
**Fig.22** in der Rückansicht sind im Unterteil die Öffnungen für die Zugaugen in Bodennähe, die auf einer festen Achse sitzenden Räder, die zwei Absätze, in denen die einzelnen Elemente miteinander fixiert werden und das Abluftrohr im Oberteil dargestellt,
**Fig.23** in der Frontansicht befindet sich im mittleren Unterteil die Öffnung zu den Zugaugen, die beiden Radkästen, die beiden Elementabsätze, in denen die Elemente zusammengefügt werden, die Stufe im Mittelteil und das Abluftrohr über welchem der Innenraum des Containers entlüftet wird.
**Fig.24** zeigt die Lage der Aufstiegshilfe vor dem Unterteil.

Insgesamt ist der vorliegende erfindungsgemäße Toilettencontainer äußerst kompakt und leicht in einem Karton zu verpacken, ohne Hilfsmittel von einer Person zu transportieren, ohne Werkzeuge zusammenzufügen, im gefüllten Zustand auf Rädern an entfernten Stellen zu entleeren.

## Patentansprüche

1. Dreiteilige Containertoilette auf Rädern, insbesondere für die Aufstellung in Räumen, hergestellt aus Formteilen als Unterteil (1),Mittelteil (6), Oberteil (17) jeweils für sich aus Kunststoff, vorwiegend im Rotationsverfahren hergestellt und lösbar miteinander verbunden, mit einer Abluftöffnung versehen, zusammengehalten mit beweglichen Beschlägen,
**dadurch gekennzeichnet, dass**
das Mittelteil (2) in Form und Größe so dimensioniert ist, dass es auf den Kopf gestellt im Unterteil (1) verstaut werden kann, unter optimaler Ausnutzung des Innenraumes des Unterteils Fig. 15,16,

2. Containertoilette nach Anspruch 1
**dadurch gekennzeichnet, dass**
Das Oberteil (3) in Form und Größe so dimensioniert ist, dass es auf den Kopf gestellt im Mittelteil (2) verstaut werden kann, unter optimaler Ausnutzung des Innenraumes des Mittelteils Fig. 15,16,

3. Containertoilette nach Anspruch 1
**dadurch gekennzeichnet, dass**
Die Unterseite des Mittelteils Fig.17,18 (2) über eine dort umlaufende Nut Fig. 7,8 (17) mit eingelegtem Dichtungsstreifen (19) auf das Unterteil Fig. 17,18 (1) aufgelegt und mit beweglichen Beschlägen Fig. 18,19 (29) lösbar miteinander verbunden wird,

4. Containertoilette nach Anspruch 1
**dadurch gekennzeichnet, dass**
Die Unterseite des Oberteils Fig. 17,18 (3) über eine dort umlaufende Nut Fig. 9,10,(17) mit eingelegtem Dichtungsstreifen (19) auf das Mittelteil (2) aufgelegt und mit beweglichen Beschlägen Fig. 18,19 (29) lösbar miteinander verbunden wird,

5. Containertoilette nach Anspruch 1
**dadurch gekennzeichnet, dass**
in den Boden 5 Fig.1,3,5 zur Aufnahme einer festsitzenden Radachse eine Nut eingelassen ist zur Aufnahme von Rädern (11), die außerhalb des Containers oder ganz oder teilweise in einem Radkasten (8) fixiert sind,

6. Containertoilette nach Anspruch 1
**dadurch gekennzeichnet, dass**
unter dem Unterteil Fig. 1,2,4 (1) oder teilweise in einem Radkasten (9), um eine vertikale Achse um 360° schwenkbare Räder (10), mit oder ohne Feststellbremse angebracht sind,

7. Containertoilette nach Anspruch 1
**dadurch gekennzeichnet, dass**
auf Bodenhöhe Fig. 1,5 an der Front- und Rückseite Öffnungen (13) eingelassen sind zur Aufnahme einer Zugvorrichtung z.B. Deichsel oder Seil,

8. Containertoilette nach Anspruch 1
**dadurch gekennzeichnet, dass**
in Boden und Wände des Unterteils Fig. 1,2,3,4,5 Aussteifungsvertiefungen (6)(7) eingeformt werden,

9. Containertoilette nach Anspruch 1
**dadurch gekennzeichnet, dass**
in die Wände des Mittelteils Fig.7,8 Aussteifungsvertiefungen (16) eingeformt werden,

10. Containertoilette nach Anspruch 1
**dadurch gekennzeichnet, dass**
in eine Wand des Oberteils (3) Fig. 9,10 ein Abluftstutzen (20) für den Anschluss einer Abluftleitung integriert ist,

11. Containertoilette nach Anspruch 1
**dadurch gekennzeichnet, dass**
zur Aufnahme des Toilettendeckels Fig. 13,14 auf dem Oberteil 3 Fig.9, 10 ein Fundament (24) angeformt oder angebracht ist,

12. Containertoilette nach Anspruch 1
**dadurch gekennzeichnet, dass**
an den Toilettendeckel Fig. 13 passend zu den Fundamenten nach Anspruch 11 passende Befestigungsvorrichtungen (29) angeformt oder angebracht sind,

13. Containertoilette nach Anspruch 1
**dadurch gekennzeichnet, dass**
unter dem Toilettendeckel Fig. 14 eine Dichtung (28) so angebracht ist, welche den Zwischenraum zwischen Oberteil (3) und Toilettendeckel Fig.13 (4) geruchsmindernd abdichtet.
